# FASCICULE DE BREVET EUROPEEN

(11) **EP 2 359 045 B1**
(45) Date de publication et mention de la délivrance du brevet: **30.09.2015**
(21) Numéro de dépôt: 09821423.2
(22) Date de dépôt: 30.11.2009
(51) Int. Cl.: F16L 37/084, F16L 21/03

(54) **ENSEMBLE D'ÉTANCHÉITÉ ET JONCTION TUBULAIRE CORRESPONDANTE**
DICHTUNGSANORDNUNG UND ZUGEHÖRIGE ROHRFÖRMIGE VERBINDUNG
SEAL ASSEMBLY AND CORRESPONDING TUBULAR JOINT

(30) Priorité: 01.12.2008 FR 0858170
(43) Date de publication de la demande: 24.08.2011
(73) Titulaire: Saint-Gobain PAM, 21 Avenue Camille Cavallier 54700 Pont-à-Mousson (FR)
(72) Inventeur: VITEL, Jean-Pierre, F-54470 Thiaucourt-Regnieville (FR); GENELOT, Pierre, F-54700 Norroy (FR); BRAHIMI, Francis, F-54700 Blenod Les Pont-a-Mousson (FR)
(74) Mandataire: Blot, Philippe Robert Emile
(86) Numéro de dépôt international: PCT/FR2009/052338
(87) Numéro de publication internationale: WO 2010/063931

(56) Documents cités:
- EP-A- 0 243 331
- EP-A- 1 818 589
- EP-A- 1 881 251
- GB-A- 2 043 802
- US-A1- 2008 284 166

## Description

La présente invention concerne un ensemble d'étanchéité pour jonction tubulaire selon le préambule de la revendication 1.

Elle s'applique notamment aux canalisations transportant de l'eau potable ou des eaux usées pour l'assainissement.

Un tel ensemble est connu de US2008/284166.

Les ensembles connus comportent des éléments anti-extrusion s'opposant à l'extrusion de la garniture d'étanchéité à travers l'interstice présent entre le bout à emboîtement et le bout uni. Ces éléments ont une rigidité radiale qui est sensiblement identique sur toute leur étendue circonférentielle. Toutefois, en raison de cette rigidité uniforme, les ensembles d'étanchéité connus s'adaptent mal aux variations de jeu entre le bout uni et le bout à emboîtement résultant des tolérances de fabrication. De plus, ils créent un risque de défaut d'étanchéité lors d'une déviation angulaire entre le bout uni et le bout à emboîtement.

L'invention a pour but de pallier cet inconvénient et de proposer une jonction tubulaire qui améliore l'étanchéité, et ceci avec des moyens économiques.

A cet effet, l'invention a pour objet un ensemble d'étanchéité, du type indiqué, caractérisé par la partie caractérisante de la revendication 1.

Selon des modes particuliers de réalisation, l'ensemble comporte l'une ou plusieurs des caractéristiques des revendications dépendantes.

L'invention a en outre pour objet une jonction tubulaire du type comprenant un bout à emboîtement d'un premier élément de canalisation, le bout à emboîtement s'étendant selon un axe central, étant muni d'une gorge intérieure et d'une extrémité libre dans laquelle est inséré un bout uni d'un deuxième élément de canalisation, la gorge intérieure formant une paroi de gorge qui est inclinée par rapport à l'axe central et qui se rétrécit vers l'extrémité libre du bout à emboîtement, caractérisée en ce qu'elle comprend un ensemble d'étanchéité tel que défini ci-dessus.

L'invention sera mieux comprise à la lecture de la description qui va suivre, donnée uniquement à titre d'exemple et faite en se référant aux dessins annexés, sur lesquels :
- la Figure 1 est une vue en perspective d'une jonction tubulaire selon l'invention à l'état non assemblé, montrant un ensemble d'étanchéité muni d'éléments anti-extrusion selon un premier mode de réalisation de l'invention ;
- la Figure 2 est une vue en coupe longitudinale d'une partie de la jonction tubulaire de la Figure 1 à l'état monté, l'ensemble d'étanchéité étant disposé entre le bout à emboîtement et le bout uni ;

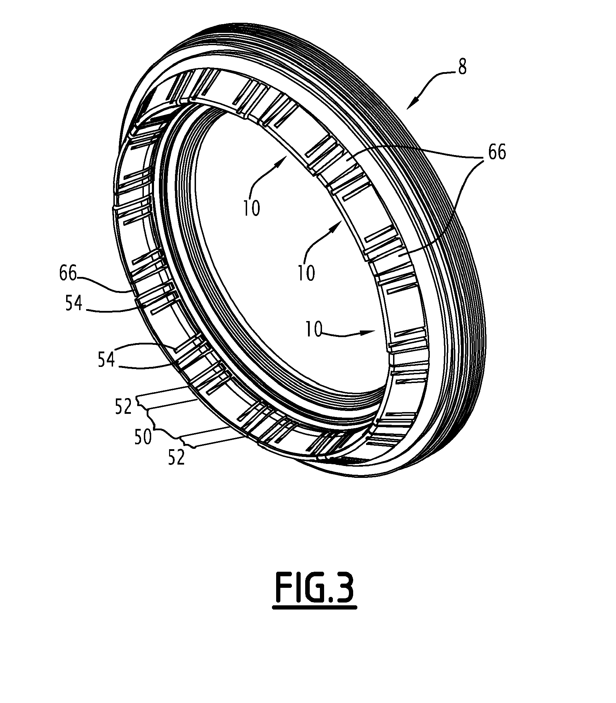

- la Figure 3 est une vue en perspective de l'ensemble d'étanchéité utilisé dans la jonction tubulaire de la Figure 1 ;
- la Figure 4 est une vue axiale de derrière d'un élément anti-extrusion de l'ensemble d'étanchéité de la Figure 3 ;
- la Figure 5 est une vue selon la coupe V-V de la Figure 4 ;
- la Figure 6 est une vue analogue à celle de la Figure 2, montrant une jonction tubulaire présentant un ensemble d'étanchéité selon un deuxième mode de réalisation de l'invention ; [suite page 4 telle que déposée]
- la Figure 7 est une vue en perspective de l'ensemble d'étanchéité muni d'éléments de verrouillage et d'éléments anti-extrusion selon le deuxième mode de réalisation de l'invention ;
- la Figure 8 est une vue en perspective d'un élément anti-extrusion et d'un élément de verrouillage à l'état non assemblé de l'ensemble d'étanchéité de la Figure 7 ;
- la Figure 9 montre un élément anti-extrusion selon un troisième mode de réalisation ; et
- les Figures 10 et 11 montrent un élément anti-extrusion selon des quatrième et cinquième modes de réalisation.

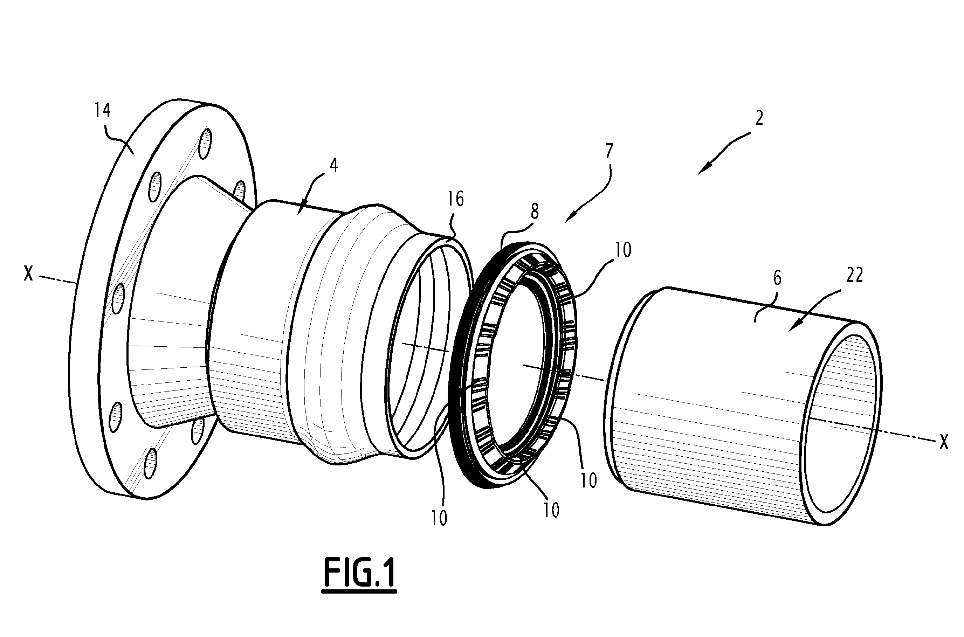

La Figure 1 montre une jonction tubulaire selon l'invention, désignée par la référence générale 2.

La jonction tubulaire 2 comporte un premier élément de canalisation muni d'un bout à emboîtement 4, un second élément de canalisation muni d'un bout uni 6, et un ensemble d'étanchéité 7. Cet ensemble d'étanchéité 7 comprend une garniture d'étanchéité 8 et des éléments anti-extrusion 10.

La jonction tubulaire 2 définit un axe central X-X se confondant avec l'axe central du bout à emboîtement et de la garniture d'étanchéité 8. Dans ce qui suit les expressions « axialement », « radialement » et « circonférentiellement » seront utilisées par rapport à cet axe central X-X.

Le bout à emboîtement 4 et le bout uni 6 sont fabriqués par exemple en fonte. De plus, ces éléments de canalisation peuvent être revêtus d'une couche protectrice non représentée.

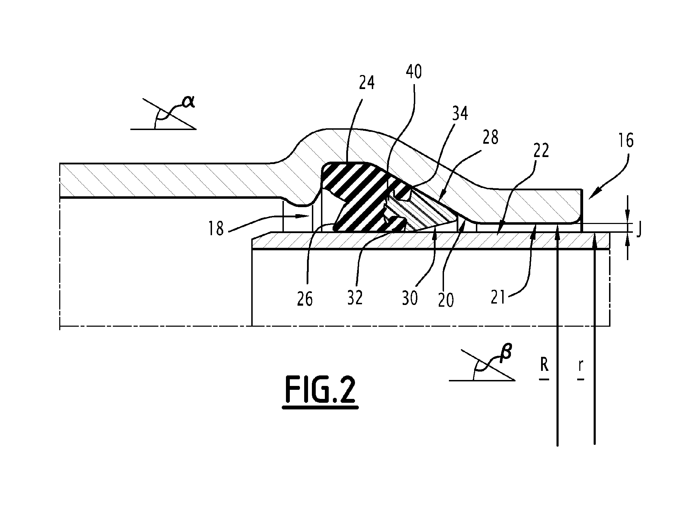

Le bout à emboîtement 4 comporte une bride de fixation 14 pour l'assemblage avec un élément de canalisation (non représenté) muni d'une bride correspondante, ainsi qu'une extrémité libre 16, tournée vers le bout uni 6 à l'état non assemblé. Le bout à emboîtement 4 comporte en outre une gorge annulaire intérieure 18 (voir Figure 2). La gorge intérieure 18 forme une paroi de gorge 20 inclinée par rapport à l'axe central X-X. La paroi 20 a une forme tronconique et se rétrécit vers l'extrémité libre 16 du bout à emboîtement. Elle forme un angle α avec l'axe central X-X.

A l'état assemblé de la jonction tubulaire 2, la garniture d'étanchéité 8, munie des éléments anti-extrusion 10, est insérée dans la gorge intérieure 18 du bout à emboîtement. La garniture d'étanchéité 8 est disposée axialement du côté tourné vers la bride de fixation 14, tandis que les éléments anti-extrusion 10, fixés à la garniture 8, sont disposés axialement du côté de l'extrémité libre 16.

Le bout à emboîtement 4 comporte une surface radialement intérieure 21 qui s'étend entre l'extrémité libre 16 et la paroi de gorge 20. Cette surface 21 est sensiblement cylindrique et est définie par un rayon R autour de l'axe X-X. Le bout uni 6 comporte une surface radialement extérieure 22 cylindrique et définie par un rayon r autour de l'axe X-X. Lors de la fabrication du bout à emboîtement 4 et du bout uni 6, les rayons R et r sont compris dans une gamme de tolérances de fabrication. En conséquence, la surface intérieure 21 et la surface extérieure 22 délimitent entre elles un jeu J = R-r. En fonction des tolérances de fabrication, ce jeu J est situé entre un jeu maximal qui est obtenu lorsque le rayon R est maximal et le rayon r est minimal, ainsi qu'un jeu minimal qui est obtenu lorsque le rayon R est minimal et le rayon r est maximal.

Le plus couramment cependant, le jeu entre le bout uni et le bout à emboîtement est un jeu moyen qui est situé entre le jeu maximal et le jeu minimal (voir Figure 2).

La garniture d'étanchéité 8 est par exemple fabriquée en caoutchouc. Elle comporte un corps de base 24 annulaire et une lèvre d'étanchéité annulaire 26.

En se référant à la Figure 2, la section transversale de l'élément anti-extrusion 10 est sensiblement triangulaire. L'élément anti-extrusion 10 forme ainsi une face d'application 28 tronconique ayant une composante dirigée radialement vers l'extérieur, une face radialement intérieure 30 et une face de liaison 32 qui est adjacente à la garniture d'étanchéité 8 et qui assure la liaison de l'élément anti-extrusion 10 avec la garniture d'étanchéité 8. La face de liaison 32 s'étend à l'état non sollicité de la garniture 8 radialement par rapport à l'axe central X-X.

Dans la configuration montrée sur la Figure 2, la face d'application 28 est inclinée d'un angle β par rapport à l'axe X-X, angle qui est sensiblement identique à l'angle d'inclinaison α de la paroi de gorge 20. La face d'application 28 s'applique donc à plat sur la paroi 20. Par ailleurs, la face d'application 28 et la face de liaison 32 forment à leur jonction, en section radiale, un point de basculement 34 permettant de faire basculer l'élément anti-extrusion 10 autour de la paroi 20.

Les éléments anti-extrusion 10 ont une forme d'arc de cercle autour de l'axe central X-X. Ainsi, les éléments anti-extrusion 10 empêchent que l'élastomère de la garniture d'étanchéité 8 soit extrudé vers l'extérieur à travers l'espace annulaire délimité par la surface extérieure 22 du bout uni 6 et la surface intérieure 21 du bout à emboîtement 4 lors de la mise en pression des éléments de canalisation.

Les éléments anti-extrusion 10 sont de préférence réalisés en une matière plastique plus dure que la matière de la garniture d'étanchéité, telle du polyamide, du polyéthylène ou du polypropylène.

Les éléments anti-extrusion 10 sont fixés à la garniture d'étanchéité 8 par tout moyen approprié. Ils peuvent notamment être fixés par collage, surmoulage, encliquetage, vissage ou rivetage. A cette fin, les éléments anti-extrusion comprennent des tétons d'ancrage 40, qui font saillie sur la face de liaison 32. Chaque téton 40 est fixé à la garniture d'étanchéité 8 par surmoulage.

Avantageusement et afin de garantir une mobilité relative de l'élément anti-extrusion 10, celui-ci est fixé uniquement par le téton d'ancrage 40 à la garniture d'étanchéité 8, la zone de contact entre la surface de liaison 32 et la garniture d'étanchéité 8 étant dépourvue de tout autre liant. La face de liaison 32 est à cet effet disposée librement sur la garniture d'étanchéité 8.

De plus, l'élément anti-extrusion 10 est dépourvu de tout élément de verrouillage adapté pour verrouiller le bout uni par rapport au bout à emboîtement.

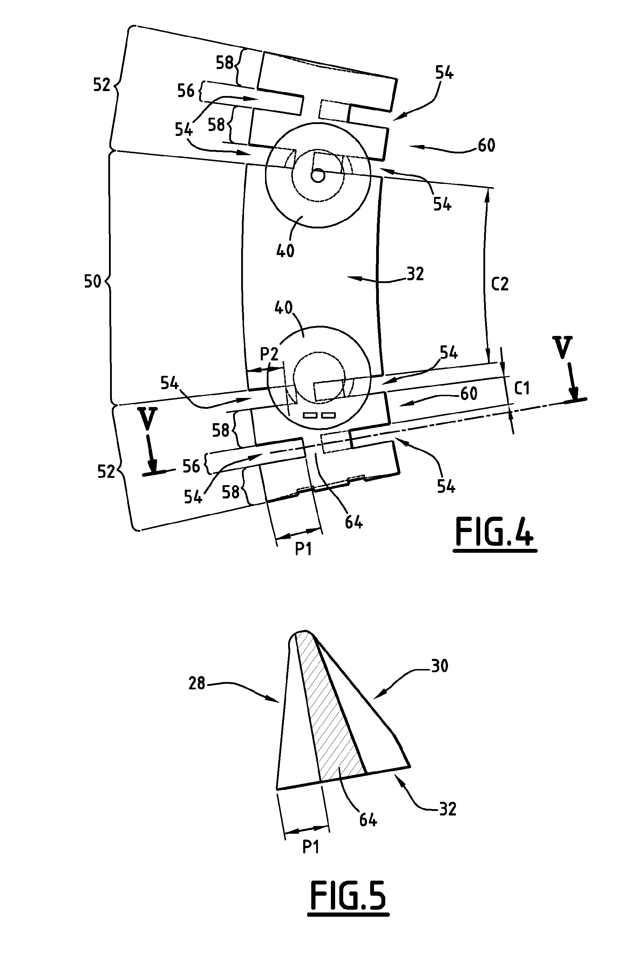

Comme indiqué sur la Figure 4, chaque élément anti-extrusion 10 comporte un domaine circonférentiel dit rigide 50 et deux domaines circonférentiels dits flexibles 52.

Le domaine rigide 50 s'étend par exemple sur plus de 50% de l'étendue circonférentielle de l'élément anti-extrusion 10. En tout cas, le domaine rigide 50 s'étend de manière ininterrompue sur une plage circonférentielle qui est supérieure à une plage circonférentielle de l'un des domaines flexibles 52.

Le domaine rigide 50 porte au moins en partie les tétons d'ancrage 40, ce qui facilite le montage de l'élément anti-extrusion 10 dans la garniture d'étanchéité 8.

Chaque domaine flexible 52 forme une extrémité circonférentielle de l'élément anti-extrusion 10, tandis que le domaine rigide 50 forme une partie circonférentielle centrale de cet élément.

Le domaine rigide 50 a une première rigidité en flexion radiale et chaque domaine flexible 52 a une deuxième rigidité en flexion radiale, qui est inférieure à la première rigidité en flexion radiale.

A cet effet, chaque domaine flexible 52 comporte des fentes de flexion 54 radiales vides. Chaque fente de flexion 54 est axialement et radialement ouverte. De plus, chaque fente de flexion 54 est axialement traversante. Chaque fente de flexion 54 forme également un fond radial.

Chaque fente de flexion 54 s'étend sur une zone circonférentielle flexible 56 et délimite une zone circonférentielle rigide 58.

L'étendue circonférentielle de chaque zone circonférentielle flexible 56 est inférieure à l'étendue circonférentielle du domaine rigide 50. L'étendue circonférentielle de chaque zone circonférentielle rigide 58 est inférieure à l'étendue circonférentielle du domaine rigide 50. De plus, chaque zone circonférentielle rigide 58 a une section transversale qui est identique à la section transversale du domaine rigide 50.

La rigidité en flexion radiale de chaque zone circonférentielle flexible est inférieure à 50% de la rigidité en flexion radiale de chaque zone circonférentiellement rigide et/ou du domaine rigide 50, notamment inférieure à 40%, 30%, 20% ou 10% de la rigidité en flexion radiale de chaque zone circonférentiellement rigide et/ou du domaine rigide 50. Aussi, la rigidité en flexion radiale de chaque zone circonférentiellement flexible 56 est cependant supérieure à 5% de la rigidité en flexion radiale de chaque zone circonférentiellement rigide 58 et/ou du domaine rigide 50.

Les fentes de flexion 54 de chaque domaine flexible 52 forment un groupe circonférentiel 60 de fentes de flexion 54. La distance circonférentielle C1 entre deux fentes de flexion 54 adjacentes du même groupe 60 est inférieure à la distance circonférentielle C2 entre une fente de flexion 54 n'appartenant pas au groupe et la fente de flexion 54 la plus proche du même groupe 60.

Dans chaque zone circonférentielle flexible 56 sont disposées deux fentes de flexion 54 radialement opposées qui forment une âme 64. En se référant à la Figure 5, l'âme 64 a une section transversale se rétrécissant vers l'extrémité axiale dirigée vers l'extrémité libre 16 du bout à emboîtement à l'état monté. En particulier, la section transversale de l'âme 64 a approximativement une forme en triangle.

Les fentes de flexion 54 adjacentes d'un même groupe 60 ont des profondeurs radiales P1, P2 différentes l'une de l'autre. Plus particulièrement, la fente de flexion 54 plus proche de l'extrémité circonférentielle a une profondeur P1 supérieure à la profondeur P2 de la fente de flexion 54 plus proche de la partie circonférentielle centrale de l'élément anti-extrusion 10. Ainsi, la flexibilité radiale du domaine flexible 52 varie sur son étendue circonférentielle. Aussi, la flexibilité radiale de chaque domaine flexible 52 augmente du côté circonférentiel central vers l'extrémité circonférentielle.

Les éléments anti-extrusion 10 sont séparés entre eux par une entretoise circonférentielle 66 venue de matière avec la garniture d'étanchéité 8, cette entretoise 66 ayant une dimension circonférentielle inférieure à la dimension circonférentielle des éléments anti-extrusion 10 afin de ne pas favoriser l'extrusion du matériau constituant la garniture d'étanchéité sous l'effet de la pression intérieure. Ces entretoises 66 améliorent la souplesse de la garniture d'étanchéité 8 et facilitent ainsi sa déformation en vue de son introduction dans le bout à emboîtement.

Le montage de la jonction tubulaire selon l'invention s'effectue de la manière décrite ci-après.

Tout d'abord, les éléments anti-extrusion 10 sont fixés sur la garniture d'étanchéité 8. Ainsi, l'ensemble 7 comprenant la garniture d'étanchéité 8 et les éléments anti-extrusion 10 peut être manipulé d'un seul bloc. Ensuite, la garniture d'étanchéité 8, portant les éléments anti-extrusion 10, est légèrement déformée à la main de manière à pouvoir être introduite et disposée dans la gorge intérieure 18 du bout à emboîtement.

Lors de l'insertion du bout uni 6 dans le bout à emboîtement 4, l'élément anti-extrusion 10 bascule dans le sens horaire sur la Figure 2 et la lèvre d'étanchéité 26 est comprimée radialement vers l'extérieur, aboutissant ainsi, après emboîtage, à une configuration dans laquelle la face d'application 28 est d'autant plus écartée de la paroi de gorge 20 que le jeu J entre le bout uni et le bout à emboîtement est faible.

Enfin, lors du recul du bout uni 6 sous l'effet d'une pression intérieure élevée, l'élément anti-extrusion 10 pivote d'abord dans le sens anti-horaire jusqu'à ce que sa face d'application 28 vienne en appui contre la paroi de gorge 20. L'élément anti-extrusion 10 se déplace alors axialement vers l'extrémité libre 16 du bout à emboîtement 4 et radialement vers l'intérieur par glissement de la face d'application 28 sur la paroi de gorge 20. On aboutit ainsi à une configuration telle que par exemple celle représentée sur la Figure 2.

Dans l'exemple de réalisation décrit, l'angle entre les faces 32 et 28 formant le point de basculement 34 est un angle aigu qui favorise l'ancrage du point de basculement 34 dans la gorge 18 du bout à emboîtement 4 en vue de former un centre de rotation stable.

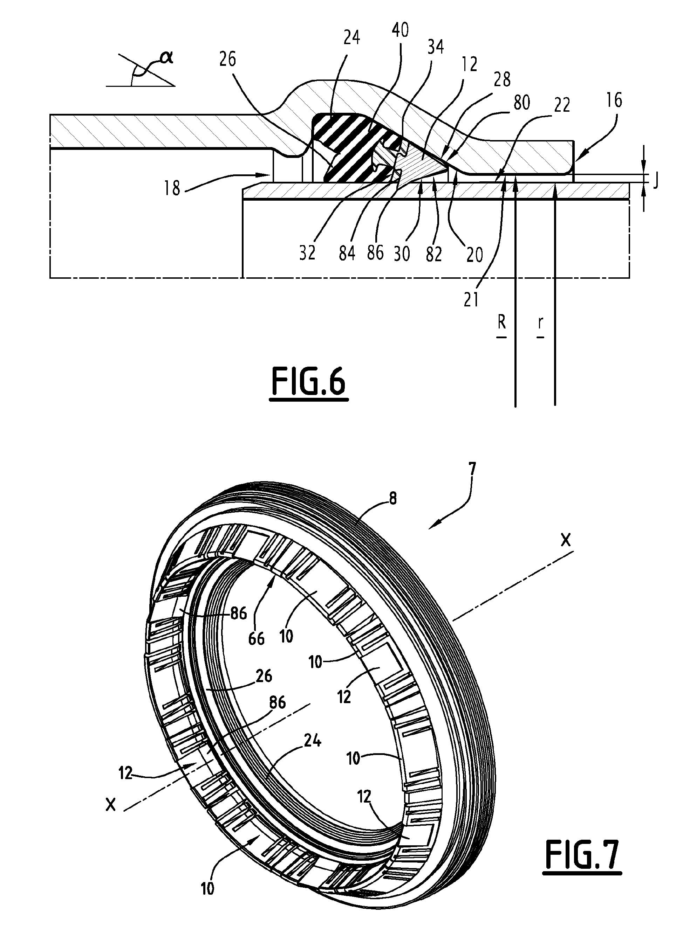

Sur la Figure 6 est représenté en coupe radiale un deuxième mode de réalisation de l'ensemble d'étanchéité selon l'invention, qui diffère de l'ensemble précédemment décrit par ce qui suit.

L'ensemble d'étanchéité 7 comporte des éléments de verrouillage 12. Chaque élément de verrouillage 12 a une section génératrice triangulaire qui s'étend sur une plage angulaire autour de l'axe central X-X.

L'élément de verrouillage 12 comporte ainsi une face extérieure 80, une face intérieure 82 et une face de liaison 84.

L'élément de verrouillage 12 comporte au niveau de la jonction entre sa face intérieure 82 et sa face de liaison 84 une dent d'accrochage 86 adaptée pour venir mordre dans la surface extérieure 22 du bout uni. Cette dent 86 comporte une surface d'accrochage dirigée à l'opposé de l'extrémité libre 16.

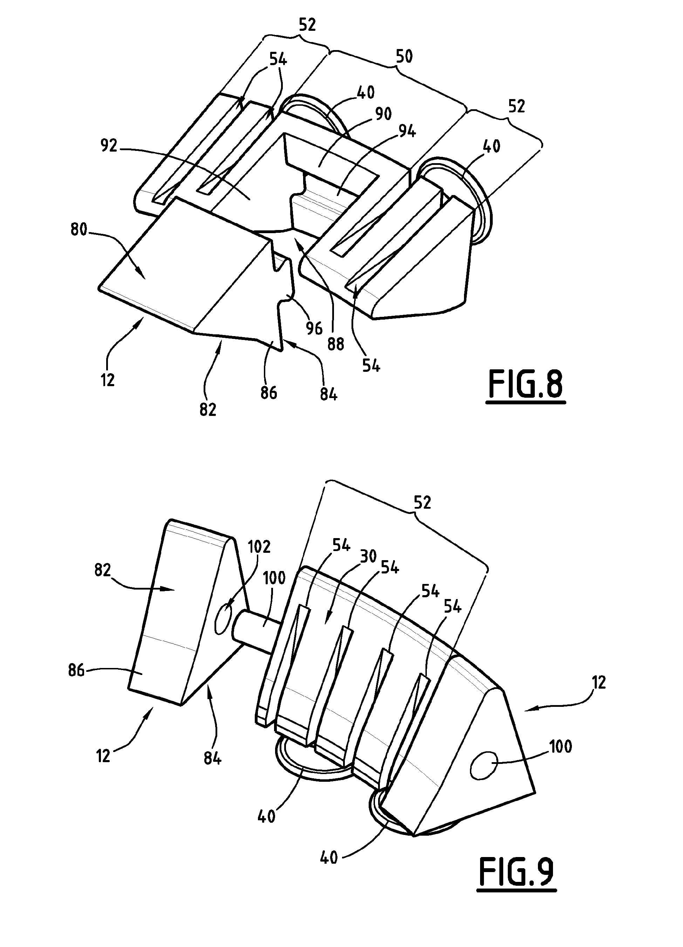

L'élément anti-extrusion 10 comporte en outre un évidement de réception 88 axialement ouvert vers l'extrémité libre 16 et radialement traversant (cf. Figure 8). L'élément de verrouillage 12 est inséré dans cet évidement 88 et est fixé à l'élément anti-extrusion 10 par tout moyen approprié, par exemple par surmoulage. L'évidement de réception 88 est ménagé dans le domaine rigide 50. Cet évidement de réception 88 est axialement fermé du côté de la face de liaison 32 par une paroi de base 90 et circonférentiellement fermé des deux côtés par des parois circonférentielles 92. La rigidité en flexion radiale du domaine rigide 50, même en présence de l'évidement de réception 88 et lorsque l'élément de verrouillage 12 est fixé dans cet évidement 88, est supérieure à la rigidité en flexion radiale dans les domaines circonférentiels flexibles 52.

Chaque élément de verrouillage 12 est fixé à un élément anti-extrusion 10. A cet effet, l'élément anti-extrusion 10 comporte une gorge 94, ménagée dans la paroi de base 90 et coopérant par complémentarité de formes avec une nervure 96 faisant saillie sur la face de liaison 84 de l'élément de verrouillage 12.

Les éléments de verrouillage 12 étant rapportés sur les éléments anti-extrusion 10, il n'est pas nécessaire qu'ils épousent les profils du bout uni 6 et du bout à emboîtement. En conséquence, les éléments de verrouillage 12 ont des profils intérieurs et extérieurs rectilignes et notamment une dent d'accrochage 86 rectiligne. Ceci est avantageux car un même élément de verrouillage 12 peut alors être utilisé avec différents diamètres de tuyaux.

Chaque élément de verrouillage 12 est un élément fabriqué en une matière ayant une dureté supérieure à celle de la surface du bout uni 6, telle que du métal.

Le fonctionnement des éléments de verrouillage 12, lors de la mise en pression, diffère en fonction du jeu radial J subsistant entre la surface intérieure 21 et la surface extérieure 22. Ainsi, lorsque ce jeu J est élevé, le verrouillage est obtenu par coincement de l'élément de verrouillage 12 entre le bout uni et le bout à emboîtement, la dent 86 de l'élément de verrouillage mordant dans la surface extérieure 22 du bout uni et sa face extérieure 80 s'appliquant contre la paroi 20 du bout à emboîtement. En revanche, lorsque ce jeu est faible, le verrouillage est obtenu par arc-boutement de l'élément de verrouillage 12 entre la surface extérieure 22 du bout uni et la paroi 20 du bout à emboîtement.

Il est à noter que l'ensemble d'étanchéité 7 de la Figure 7 comporte également des éléments anti-extrusion 10 identiques à ceux du premier mode de réalisation, à savoir sans élément de verrouillage 12, les éléments anti-extrusion 10 munis d'un élément de verrouillage 12 et ceux dépourvus d'élément de verrouillage 12 étant disposés régulièrement et alternativement sur tout le pourtour de la garniture d'étanchéité.

Les éléments anti-extrusion 10 munis ou non d'élément de verrouillage 12 sont agencés sur la garniture d'étanchéité 8 en fonction de la force de verrouillage nécessaire.

La Figure 9 montre, à l'état non entièrement assemblé, un élément anti-extrusion 10 muni de deux éléments de verrouillage 12 selon une variante de l'invention.

Cette variante diffère de l'élément anti-extrusion 10 et élément de verrouillage 12 de la Figure 8 par ce qui suit.

L'élément anti-extrusion 10 comporte un seul domaine flexible 52. Ce domaine 52 constitue un domaine circonférentiel central de l'élément anti-extrusion 10. Ainsi, la flexibilité radiale de l'élément anti-extrusion 10 est plus importante dans le domaine central que dans les domaines d'extrémité.

Le domaine flexible 52 comporte quatre fentes de flexion 54 disposées selon la direction circonférentielle sur la face inférieure 30. Quatre fentes 54 supplémentaires sont disposées sur la face extérieure 28.

Les fentes de flexion 54 ont toutes la même profondeur radiale, ce qui facilite la fabrication.

En outre, l'élément anti-extrusion 10 comporte deux ergots de fixation 100 s'étendant du domaine flexible 52 circonférentiellement vers l'extérieur. Les ergots 100 forment les extrémités circonférentielles de l'élément anti-extrusion 10.

Chaque élément de verrouillage 12 comporte un alésage circonférentiel 102 complémentaire de l'ergot 100. L'élément de verrouillage 12 est enfiché circonférentiellement sur l'ergot, la direction de montage étant donc sensiblement circonférentielle, ce qui rend particulièrement simple et facile le montage des éléments de verrouillage 12 sur l'élément anti-extrusion 10.

De plus, les éléments de verrouillage 12 peuvent tourner librement sur l'ergot 100 autour de l'axe de l'ergot 100, ce qui leur confère une meilleure aptitude au verrouillage.

Le fait que chaque élément anti-extrusion 10 porte deux éléments de verrouillage 12 permet également d'augmenter le nombre d'éléments de verrouillage 12 par ensemble 7 sans pour autant modifier le moule de la garniture d'étanchéité 8.

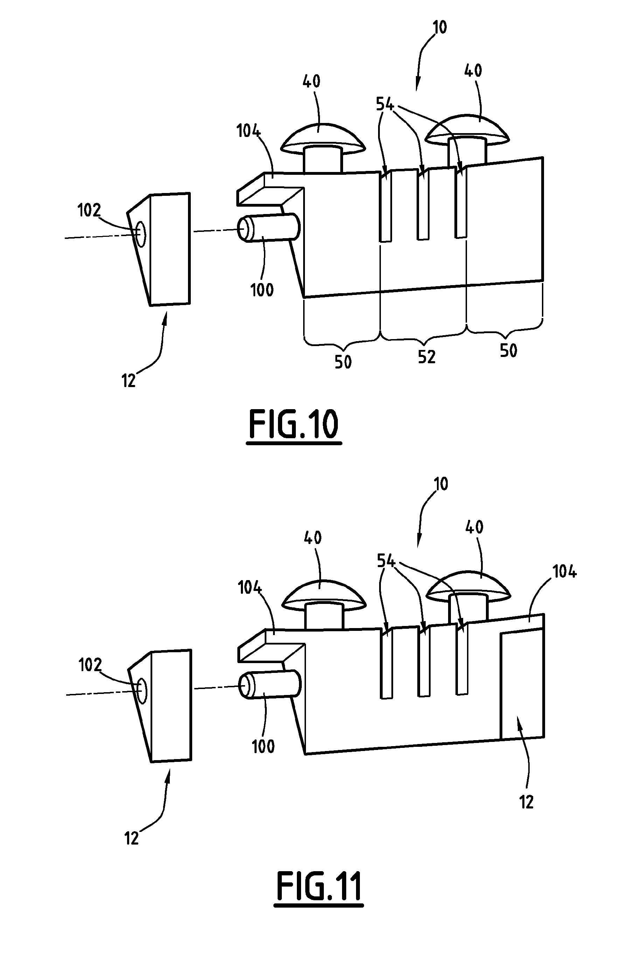

Sur la Figure 10 est représenté un élément anti-extrusion 10 et un élément de verrouillage 12. Ces éléments diffèrent des éléments de la Figure 9 par ce qui suit.

L'élément anti-extrusion 10 comporte un seul ergot 100 faisant saillie circonférentiellement.

Une des extrémités circonférentielles de l'élément anti-extrusion 10 est dépourvue de moyen de fixation et constitue un domaine rigide 50.

L'élément anti-extrusion 10 comporte en outre un organe de blocage 104 adapté pour s'opposer à une rotation de l'élément de verrouillage 12 autour de l'axe de l'ergot 100. Ainsi, lors de la mise en pression, le déplacement de l'élément de verrouillage 12 est limité. En l'occurrence, l'organe de blocage 104 est constitué par une paroi solidaire de l'élément anti-extrusion 10 s'étendant circonférentiellement.

La Figure 11 montre une variante consistant en une combinaison des caractéristiques des Figures 9 et 10.

Ainsi, l'élément anti-extrusion 10 comporte deux ergots 100, dont l'un est visible, et deux éléments de verrouillage 12.

Pour chaque élément de verrouillage 12, l'élément anti-extrusion 10 comporte un organe de blocage 104.

Il est à noter que toutes les caractéristiques structurelles et fonctionnelles décrites en liaison avec un mode de réalisation spécifique peuvent être appliquées d'une manière analogue et indépendamment les unes des autres aux autres modes de réalisation.

En variante, les domaines flexibles 52 peuvent porter d'autres évidements de flexibilité que des fentes de flexion 54, par exemple des trous borgnes. En variante encore, les évidements des domaines flexibles 52 peuvent être radialement traversants.

L'emplacement dépourvu d'évidement de flexion est la zone ayant la rigidité en flexion radiale la plus élevée de l'élément anti-extrusion. En d'autres termes, l'emplacement dépourvu d'évidement de flexion est la section radiale la plus rigide de cet élément anti-extrusion.

Un autre aspect de l'invention porte sur un ensemble d'étanchéité et de verrouillage pour jonction tubulaire entre un bout uni 6 et un bout à emboîtement 4, du type comportant
- une garniture d'étanchéité 8 définissant un axe central X-X, et
- au moins un élément anti-extrusion 10 qui est adapté pour empêcher l'extrusion de la garniture d'étanchéité 8 entre le bout uni 6 et le bout à emboîtement 4, et sur lequel est fixé au moins un élément de verrouillage 12 adapté pour verrouiller le bout uni 6 par rapport au bout à emboîtement 4, dans lequel ensemble le ou chaque élément de verrouillage 12 est fixé sur une extrémité circonférentielle de l'élément anti-extrusion.

Selon un aspect plus particulier de cet ensemble, chaque élément de verrouillage 12 est fixé à l'élément anti-extrusion 10 au moyen d'au moins un organe de fixation, notamment un ergot d'ancrage 100 coopérant avec un alésage 102.

Selon un autre aspect particulier de cet ensemble, la direction de montage du ou de chaque élément de verrouillage 12 sur l'élément anti-extrusion 10 s'étend sensiblement circonférentiellement.

Par ailleurs, cet ensemble peut comporter toutes les autres caractéristiques techniques des ensembles décrits précédemment.

## Revendications

1. Ensemble d'étanchéité pour jonction tubulaire entre un bout uni (6) et un bout à emboîtement (4), comportant
- une garniture d'étanchéité (8) définissant un axe central (X-X), et
- des éléments anti-extrusion (10) qui sont adaptés pour empêcher l'extrusion de la garniture d'étanchéité (8) entre le bout uni (6) et le bout à emboîtement (4),
les éléments anti-extrusion (10) étant fixés à la garniture d'étanchéité (8),
les éléments anti-extrusion (10) étant séparés entre eux par une entretoise circonférentielle (66) venue de matière avec la garniture d'étanchéité,
les éléments anti-extrusion (10) ayant une forme d'arc de cercle autour de l'axe central (X-X)
**caractérisé en ce que** chaque élément anti-extrusion comporte au moins un premier évidement de flexion (54) adapté pour permettre une flexion radiale de l'élément anti-extrusion, et **en ce que** la rigidité en flexion radiale de l'élément anti-extrusion (10), à l'emplacement circonférentiel du ou de chaque évidement de flexion (54), est inférieure à 50%, notamment inférieure à 40%, 30%, 20% ou 10%, de la rigidité en flexion radiale à au moins un emplacement circonférentiel dépourvu d'évidement de flexion.

2. Ensemble selon la revendication 1, **caractérisé en ce que** le ou chaque évidement de flexion (54) est axialement et/ou radialement ouvert.

3. Ensemble selon la revendication 2, **caractérisé en ce que** le ou chaque évidement de flexion (54) est axialement et/ou radialement traversant.

4. Ensemble selon l'une quelconque des revendications précédentes, **caractérisé en ce que** le ou chaque évidement de flexion est une fente radiale (54).

5. Ensemble selon l'une quelconque des revendications précédentes, **caractérisé en ce que** les éléments anti-extrusion (10) comportent au moins un deuxième évidement de flexion (54).

6. Ensemble selon la revendication 5, **caractérisé en ce que** les premier et deuxième évidements de flexion (54) au moins forment un groupe circonférentiel (60) d'évidements de flexion.

7. Ensemble selon la revendication 6, **caractérisé en ce que** la profondeur radiale (P1 ; P2) varie d'un évidement de flexion à l'autre du groupe circonférentiel d'évidements de flexion.

8. Ensemble selon la revendication 7, **caractérisé en ce que** les profondeurs radiales (P1, P2) de deux évidements de flexion (54) adjacentes décroissent vers la partie circonférentielle centrale de l'élément anti-extrusion (10).

9. Ensemble selon la revendication 8, **caractérisé en ce que** la distance circonférentielle (C1) entre les évidements de flexion du groupe circonférentiel d'évidements est inférieure à la distance circonférentielle (C2) entre un autre évidement de flexion n'appartenant pas à ce groupe circonférentiel et l'évidement de flexion le plus proche de ce groupe circonférentiel.

10. Ensemble selon l'une quelconque des revendications précédentes, **caractérisé en ce que** le ou chaque évidement de flexion (54) est disposé sur au moins un domaine (52) d'extrémité circonférentielle de l'élément anti-extrusion, de telle sorte que la flexibilité radiale de l'élément anti-extrusion (10) est plus importante dans ce domaine d'extrémité que dans un domaine (50) circonférentiellement central de l'élément anti-extrusion.

11. Ensemble selon l'une quelconque des revendications 1 à 9, **caractérisé en ce que** le ou chaque évidement de flexion (54) est disposé sur un domaine (52) circonférentiellement central de l'élément anti-extrusion, de sorte que la flexibilité radiale de l'élément anti-extrusion est plus importante dans le domaine circonférentiellement central que dans des domaines d'extrémité circonférentielle de l'élément anti-extrusion.

12. Ensemble selon l'une quelconque des revendications précédentes, **caractérisé en ce que** les évidements de flexion comportent au moins deux évidements de flexion radialement opposés et définissant une âme (64) entre eux, en particulier **en ce que** l'âme (64) a une section transversale se rétrécissant vers une extrémité axiale de l'élément anti-extrusion.

13. Ensemble selon l'une quelconque des revendications précédentes, **caractérisé en ce qu'**il comporte au moins un élément de verrouillage (12) adapté pour verrouiller le bout uni (6) par rapport au bout à emboîtement (4).

14. Ensemble selon la revendication 13, **caractérisé en ce que** le ou chaque élément de verrouillage (12) est fixé à un élément anti-extrusion (10) par tout moyen rapproprié.

15. Ensemble selon l'une des revendications précédentes 13 ou 14, **caractérisé en ce que** le ou chaque élément de verrouillage (12) est fixé à l'élément anti-extrusion (10) au moyen d'au moins un organe de fixation, notamment un ergot d'ancrage (100).

16. Ensemble selon la revendication 15, **caractérisé en ce que** le ou chaque élément de verrouillage (12) est fixé sur une extrémité circonférentielle de l'élément anti-extrusion.

17. Ensemble selon la revendication 16, **caractérisé en ce que** la direction de montage du ou de chaque élément de verrouillage sur l'élément anti-extrusion s'étend sensiblement circonférentiellement.

18. Jonction tubulaire, du type comprenant
- un bout à emboîtement (4) d'un premier élément de canalisation, le bout à emboîtement (4) s'étendant selon un axe central (X-X), étant muni d'une gorge intérieure (18) et d'une extrémité libre (16) dans laquelle est inséré un bout uni (6) d'un deuxième élément de canalisation, la gorge intérieure (18) formant une paroi de gorge (20) qui est inclinée par rapport à l'axe central (X-X) et qui se rétrécit vers l'extrémité libre (16) du bout à emboîtement (4),
**caractérisée en ce qu'**elle comprend un ensemble d'étanchéité selon l'une quelconque des revendications précédentes disposé dans la gorge intérieure (18).

## Patentansprüche

1. Dichtungseinrichtung für Rohrverbindung zwischen einem Glattende (6) und einem Muffenende (4), aufweisend
- einen Dichtungseinsatz (8), der eine zentrale Achse (X-X) definiert, und
- Antiverdrängungselemente (10), die angepasst sind zum Verhindern der Verdrängung des Dichtungseinsatzes (8) zwischen dem Glattende (6) und dem Muffenende (4),
wobei die Antiverdrängungselemente (10) an dem Dichtungseinsatz (8) befestigt sind,
wobei die Antiverdrängungselemente (10) voneinander separiert sind durch einen umfänglichen Stützteil (66), der mit dem Dichtungseinsatz aus einem Stück ist,
wobei die Antiverdrängungselemente (10) eine Kreisbogenform um die zentrale Achse (X-X) herum haben,
**dadurch gekennzeichnet, dass** jedes Antiverdrängungselement wenigstens eine erste Biegeaussparung (54) hat, die angepasst ist zum Ermöglichen einer radialen Biegung des Antiverdrängungselements, und dass die radiale Biegesteifigkeit des Antiverdrängungselements (10) an der Umfangsposition der oder jeder Biegeaussparung (54) um 50%, insbesondere um 40%, 30%, 20% oder 10%, kleiner ist als die radiale Biegesteifigkeit an wenigstens einer Umfangsposition ohne Biegeaussparung.

2. Einrichtung gemäß Anspruch 1, **dadurch gekennzeichnet, dass** die oder jede Biegeaussparung (54) axial und/oder radial offen ist.

3. Einrichtung gemäß Anspruch 2, **dadurch gekennzeichnet, dass** die oder jede Biegeaussparung (54) axial und/oder radial durchgehend ist.

4. Einrichtung gemäß irgendeinem der vorhergehenden Ansprüche, **dadurch gekennzeichnet, dass** die oder jede Biegeaussparung ein radialer Schlitz (54) ist.

5. Einrichtung gemäß irgendeinem der vorhergehenden Ansprüche, **dadurch gekennzeichnet, dass** die Antiverdrängungselemente (10) wenigstens eine zweite Biegeaussparung (54) haben.

6. Einrichtung gemäß Anspruch 5, **dadurch gekennzeichnet, dass** die erste und die zweite Biegeaussprung (54) wenigstens eine umfängliche Gruppe (60) von Biegeaussparungen bilden.

7. Einrichtung gemäß Anspruch 6, **dadurch gekennzeichnet, dass** die radiale Tiefe (P1; P2) von einer Biegeaussparung zur anderen der umfänglichen Gruppe von Biegeaussparungen variiert.

8. Einrichtung gemäß Anspruch 7, **dadurch gekennzeichnet, dass** die radialen Tiefen (P1, P2) von zwei benachbarten Biegeaussparungen (54) sich zum zentralen Umfangsabschnitt des Antiverdrängungselements (10) hin verringern.

9. Einrichtung gemäß Anspruch 8, **dadurch gekennzeichnet, dass** die Umfangsdistanz (C1) zwischen den Biegeaussparungen der umfänglichen Gruppe von Aussparungen kleiner ist als die Umfangsdistanz (C2) zwischen eine anderen Biegeaussparung, die nicht zu dieser umfänglichen Gruppe gehört, und der Biegeaussparung, die dieser umfänglichen Gruppe nächstgelegen ist.

10. Einrichtung gemäß irgendeinem der vorhergehenden Ansprüche, **dadurch gekennzeichnet, dass** die oder jede Biegeaussparung (54) in wenigstens einem Umfangsendbereich (52) des Antiverdrängungselements angeordnet ist, sodass die radiale Flexibilität des Antiverdrängungselements (10) in diesem Endbereich stärker ist als in einem zentralen Umfangsbereich (50) des Antiverdrängungselements.

11. Einrichtung gemäß irgendeinem der Ansprüche 1 bis 9, **dadurch gekennzeichnet, dass** die oder jede Biegeaussparung (54) in einem zentralen Umfangsbereich (52) des Antiverdrängungselements angeordnet ist, sodass die radiale Flexibilität des Antiverdrängungselements in dem zentralen Umfangsbereich stärker ist als in den Umfangsendbereichen des Antiverdrängungselements.

12. Einrichtung gemäß irgendeinem der vorhergehenden Ansprüche, **dadurch gekennzeichnet, dass** die Biegeaussparungen wenigstens zwei radiale Biegeaussparungen haben, die einander entgegengesetzt sind und die zwischen einander einen Steg (64) definieren, insbesondere dass der Steg (64) einen Querschnitt hat, der sich zu einem axialen Ende des Antiverdrängungselements hin verringert.

13. Einrichtung gemäß irgendeinem der vorhergehenden Ansprüche, **dadurch gekennzeichnet, dass** sie wenigstens ein Verriegelungselement (12) aufweist, das angepasst ist zum Verriegeln des Glattendes (6) relativ zum Muffenende (4).

14. Einrichtung gemäß Anspruch 13, **dadurch gekennzeichnet, dass** das oder jedes Verriegelungselement (12) an einem Antiverdrängungselement (10) befestigt ist mittels jeglichen geeigneten Mittels.

15. Einrichtung gemäß einem der vorhergehenden Ansprüche 13 oder 14, **dadurch gekennzeichnet, dass** das oder jedes Verriegelungselement (12) an dem Antiverdrängungselement (10) befestigt ist mittels wenigstens eines Befestigungsorgans, insbesondere eines Verankerungsstifts (100).

16. Einrichtung gemäß Anspruch 15, **dadurch gekennzeichnet, dass** das oder jedes Verriegelungselement (12) an einem Umfangsende des Antiverdrängungselements befestigt ist.

17. Einrichtung gemäß Anspruch 16, **dadurch gekennzeichnet, dass** die Richtung des Einbaus des oder jedes Verriegelungselements an das Antiverdrängungselement sich im Wesentlichen umfänglich erstreckt.

18. Rohrverbindung, des Typs aufweisend
- ein Muffenende (4) eines ersten Rohrelements, wobei das Muffenende (4) sich entlang einer zentralen Achse (X-X) erstreckt und mit einer inneren Hohlkehle (18) und einem freien Ende (16) versehen ist, in welches ein Glattende (6) eines zweiten Rohrelements eingesetzt ist, wobei die innere Hohlkehle (18) eine Hohlkehle-Wandung (20) bildet, die relativ zur zentralen Achse (X-X) geneigt ist und die sich zu dem freien Ende (16) des Muffenendes (4) hin verengt,
**dadurch gekennzeichnet, dass** sie eine Dichtungseinrichtung gemäß irgendeinem der vorhergehenden Ansprüche aufweist, die in der inneren Hohlkehle (18) angeordnet ist.

## Claims

1. Sealing set for a pipe joint between a spigot end (6) and a bell end (4), comprising
- a sealing member (8) defining a central axis (X-X), and
- anti-extrusion elements (10) adapted to prevent extrusion of the sealing member (8) between the spigot end (6) and the bell end (4),
the anti-extrusion elements (10) being fixed to the sealing member (8),
the anti-extrusion elements (10) being separated from one another by a circumferential spacer (66) integrally formed with the sealing member,
the anti-extrusion elements (10) being in the shape of an arc of a circle around the central axis (X-X),
**characterised in that** each anti-extrusion element has at least one first flexion recess (54) adapted to allow radial flexion of the anti-extrusion element; and **in that** the rigidity of the anti-extrusion element (10) in terms of radial flexion at the circumferential location of the or each flexion recess (54) is less than 50 %, especially less than 40 %, 30 %, 20 % or 10 %, of the rigidity in terms of radial flexion at at least one circumferential location without a flexion recess.

2. Set according to claim 1, **characterised in that** the or each flexion recess (54) is axially and/or radially open.

3. Set according to claim 2, **characterised in that** the or each flexion recess (54) is a through-recess passing through axially and/or radially.

4. Set according to any one of the preceding claims, **characterised in that** the or each flexion recess is a radial slot (54).

5. Set according to any one of the preceding claims, **characterised in that** the anti-extrusion elements (10) include at least one second flexion recess (54).

6. Set according to claim 5, **characterised in that** the first and second flexion recesses (54) at least form a circumferential group (60) of flexion recesses.

7. Set according to claim 6, **characterised in that** the radial depth (P1; P2) varies from one flexion recess to another in the circumferential group of flexion recesses.

8. Set according to claim 7, **characterised in that** the radial depths (P1, P2) of two adjacent flexion recesses (54) decrease towards the central circumferential part of the anti-extrusion element (10).

9. Set according to claim 8, **characterised in that** the circumferential distance (C1) between the flexion recesses of the circumferential group of recesses is less than the circumferential distance (C2) between another flexion recess not belonging to that circumferential group and the closest flexion recess of that circumferential group.

10. Set according to any one of the preceding claims, **characterised in that** the or each flexion recess (54) is arranged in at least one circumferential end region (52) of the anti-extrusion element so that the radial flexibility of the anti-extrusion element (10) is greater **in that** end region than in a circumferentially central region (50) of the anti-extrusion element.

11. Set according to any one of claims 1 to 9, **characterised in that** the or each flexion recess (54) is arranged in a circumferentially central region (52) of the anti-extrusion element so that the radial flexibility of the anti-extrusion element is greater in the circumferentially central region than in the circumferential end regions of the anti-extrusion element.

12. Set according to any one of the preceding claims, **characterised in that** the flexion recesses comprise at least two radially opposite flexion recesses which define a central web (64) between them; especially **in that** the central web (64) has a cross-section which becomes narrower towards an axial end of the anti-extrusion element.

13. Set according to any one of the preceding claims, **characterised in that** it comprises at least one locking element (12) adapted to lock the spigot end (6) in place with respect to the bell end (4).

14. Set according to claim 13, **characterised in that** the or each locking element (12) is fixed to an anti-extrusion element (10) by any appropriate means.

15. Set according to one of the preceding claims 13 or 14, **characterised in that** the or each locking element (12) is fixed to the anti-extrusion element (10) by means of at least one fixing element, especially an anchoring pin (100).

16. Set according to claim 15, **characterised in that** the or each locking element (12) is fixed to a circumferential end of the anti-extrusion element.

17. Set according to claim 16, **characterised in that** the mounting direction of the or each locking element on the anti-extrusion element extends substantially circumferentially.

18. Pipe joint, of a kind comprising
- a bell end (4) of a first piping element, the bell end (4) extending along a central axis (X-X) and being provided with an internal throat (18) and with a free end (16) into which is inserted a spigot end (6) of a second piping element, the internal throat (18) forming a throat wall (20) which is angled with respect to the central axis (X-X) and which becomes narrower towards the free end (16) of the bell end (4),
**characterised in that** it comprises a sealing set according to any one of the preceding claims arranged in the internal throat (18).
